# EUROPEAN PATENT APPLICATION

(11) **EP 4 434 602 A1**
(43) Date of publication of application: **25.09.2024**
(21) Application number: 24161771.1
(22) Date of filing: 06.03.2024
(51) Int. Cl.: B01D 36/00, C02F 1/00, B01D 33/11, B01D 33/41, C02F 1/32, C02F 103/00

(54) **PURIFICATION DEVICE AND PURIFICATION SYSTEM FOR WATER TO BE PROCESSED**

(30) Priority: 24.03.2023 JP 2023047658
(71) Applicant: Yanmar Holdings Co., Ltd., Osaka-shi, Osaka (JP)
(72) Inventor: NAIKI, Toshihito, Kunisaki-shi (JP); MIURA, Ryoji, Kunisaki-shi (JP)
(74) Representative: Dennemeyer & Associates S.A.

(57) **Abstract**

[Problem] To provide a purification device for water to be processed, which may purify the water to be processed with a simple and compact configuration.

[Solution] The purification device for the water to be processed includes a collection pump and a filtration device located downstream of the collection pump. The filtration device includes an inflow port into which the water to be processed having passed through the collection pump flows, a filter that filters the water to be processed, and a discharge port through which filtrate water having passed through the filter is discharged. The inflow port is located above the collection pump. The discharge port is located below the inflow port.

## Description

### TECHNICAL FIELD

The present invention relates to a purification device and a purification system for water to be processed.

### BACKGROUND ART

Conventionally, various processing devices that purify the water to be processed have been proposed. For example, Patent Document 1 discloses a processing device that processes seawater, contaminated water, or sewage.

### PRIOR ART DOCUMENT

### PATENT DOCUMENT

Patent Document 1: International Publication WO2014/174309

### SUMMARY OF INVENTION

### TECHNICAL PROBLEM

In Patent Document 1, the configuration of the processing device is complicated, and there is room for improvement.

The present invention has been made to solve the above problem, and an object of the present invention is to provide a purification device and a purification system for water to be processed, which may purify the water to be processed with a simple and compact configuration.

### SOLUTION TO PROBLEM

A purification device for water to be processed according to one aspect of the present invention includes a collection pump, and a filtration device located downstream of the collection pump, and the filtration device includes an inflow port into which the water to be processed having passed through the collection pump flows, a filter that filters the water to be processed, and a discharge port through which filtrate water having passed through the filter is discharged, the inflow port is located above the collection pump, and the discharge port is located below the inflow port.

A purification system for water to be processed according to another aspect of the present invention includes the above-described purification device, a cleaning device that cleans a bottom of a ship when the water to be processed is debris-containing water that contains debris separated from the bottom of the ship, and a collection hose that delivers the debris-containing water from the cleaning device to the purification device.

### ADVANTAGEOUS EFFECTS OF INVENTION

With the above configuration, the water to be processed may be purified with a simple and compact configuration.

### BRIEF DESCRIPTION OF DRAWINGS

FIG. 1 is an explanatory diagram illustrating a schematic configuration of a purification system for water to be processed according to an embodiment of the present invention.
FIG. 2 is a perspective view illustrating an external appearance of a debris collection device included in the above-described purification system.
FIG. 3 is a perspective view illustrating the external appearance of the above-described debris collection device.
FIG. 4 is a perspective view illustrating the external appearance of the above-described debris collection device.
FIG. 5 is a perspective view illustrating the external appearance of the above-described debris collection device.
FIG. 6 is a cross-sectional view of a filtration device included in the above-described debris collection device.
FIG. 7A is an explanatory diagram schematically illustrating a state where a debris collection hose is connected to a first valve and a flow of debris-containing water at that time.
FIG. 7B is an explanatory diagram schematically illustrating a state where the above-described debris collection hose is connected to a third valve and a flow of seawater at that time.

### DESCRIPTION OF EMBODIMENTS

An embodiment of the present invention will be described with reference to the drawings.

### <1. Outline of Purification System>

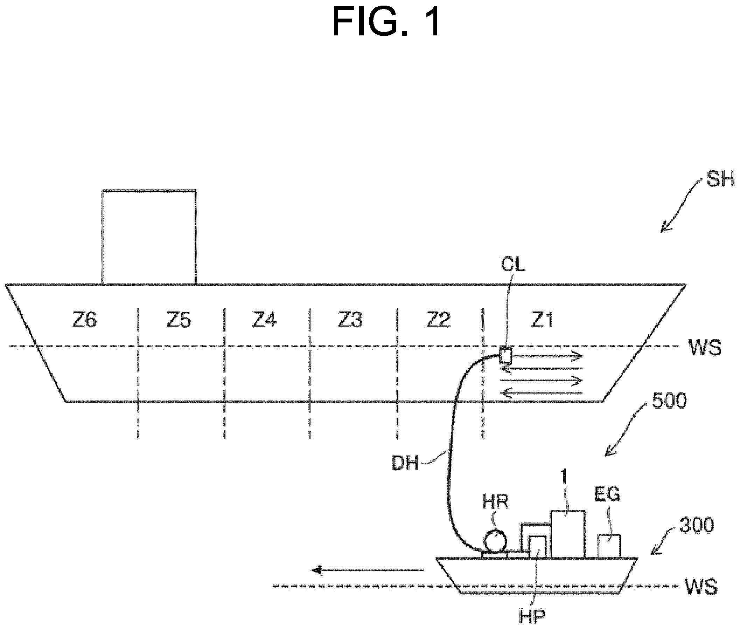

FIG. 1 is an explanatory diagram illustrating a schematic configuration of a purification system 500 for water to be processed according to an embodiment of the present invention. The purification system 500 includes a debris collection device 1, a cleaning device CL, and a debris collection hose DH. Here, in this description, the debris mainly refers to shellfishes, algae, and other attachments separated from the bottom of a ship SH by the cleaning device CL, but may include objects (e.g., granular substances such as sand floating in the sea) other than the attachments described above. Furthermore, the bottom of the ship SH described herein broadly refers to a portion of the ship SH that is located below a water surface WS and is in contact with seawater. Hereinafter, the debris (e.g., seawater) that contains water is also referred to as debris-containing water.

The debris collection device 1 is an example of a purification device that purifies (cleans) the debris-containing water as the water to be processed and collects debris. A detailed configuration of the debris collection device 1 will be described below. The cleaning device CL is a device that cleans the bottom of the ship SH. The cleaning device CL includes, for example, an underwater cleaner (remote operation vehicle (ROV)) capable of performing a cleaning action based on a remote operation by a controller. The cleaning device CL splashes for example high-pressure water to the ship bottom to separate debris from the ship bottom. The cleaning device CL is equipped with a camera that captures images of the surroundings and outputs captured images underwater to the outside (for example, a personal computer (PC) on a work ship 300 described below) via a cable (not illustrated).

The debris collection hose DH is a hose that delivers the debris-containing water from the cleaning device CL to the debris collection device 1. The entire length of the debris collection hose DH is, for example, approximately 100 m, but may be arbitrarily set.

The debris collection device 1 is installed on the work ship 300 different from the ship SH that is a target for bottom cleaning. In addition to the debris collection device 1, an electric generator EG, a high-pressure pump HP, a hose reel HR, and the like, are also provided on the work ship 300. The electric generator EG generates the electric power to be supplied to the debris collection device 1 and the cleaning device CL. The high-pressure pump HP supplies high-pressure water to the cleaning device CL via a high-pressure water supply hose. The hose reel HR is a reel to wind the debris collection hose DH, the high-pressure water supply hose described above, and various cables. The various cables include a cable that supplies electric power from the electric generator EG to the cleaning device CL, a cable that transmits captured image data output from the cleaning device CL, a sensor signal, and the like.

When the bottom of the ship SH such as a large ship is cleaned while the ship SH is anchored, first, a work area of the cleaning device CL for the ship SH is divided into a plurality of areas. In the example of FIG. 1, the work area is divided into six areas Z1 to Z6 from the bow to the stern of the ship SH. Then, for example, in the area Z1, the cleaning device CL is advanced downward from the water surface WS while the moving direction of the cleaning device CL is alternately switched between the direction from the bow to the stern and the direction from the stern to the bow by remote operation. At this time, with the PC on the work ship 300, a worker operates the controller while viewing the image captured and sent by the camera of the cleaning device CL and moves the cleaning device CL.

By supplying the high-pressure water from the work ship 300 to the cleaning device CL via the high-pressure pump HP, the cleaning device CL sprays the high-pressure water to the ship bottom to separate debris from the ship bottom. The separated debris is mixed with the surrounding seawater and is supplied as the debris-containing water from the cleaning device CL to the debris collection device 1 via the debris collection hose DH. The debris collection device 1 collects the debris contained in the debris-containing water. The seawater from which the debris has been removed is subjected to sterilization processing by, for example, ultraviolet irradiation, and then released to the ocean.

When the bottom cleaning work in the area Z1 is completed, the work ship 300 is moved toward the stern of the ship SH and stopped, and the same work as described above by the cleaning device CL is performed in the area Z2. Subsequently, the same work as described above is performed for the areas Z3 to Z6.

According to the present embodiment, as the debris collection device 1 is installed on the work ship 300, even when the entire length of the debris collection hose DH is short, for example, approximately 100 m, the work ship 300 is moved each time the areas Z1 to Z6 are cleaned so that the entire bottom of the ship SH may be cleaned. This eliminates the need for use of the long debris collection hose DH even when cleaning the bottom of the large ship SH (for example, having an entire length equal to or more than 100 m). That is, from the viewpoint of performing bottom cleaning without using the long debris collection hose DH, it is desirable that the debris collection device 1 be installed in the work ship 300 different from the ship SH, which is the target for bottom cleaning.

### <2. Details of Debris Collection Device>

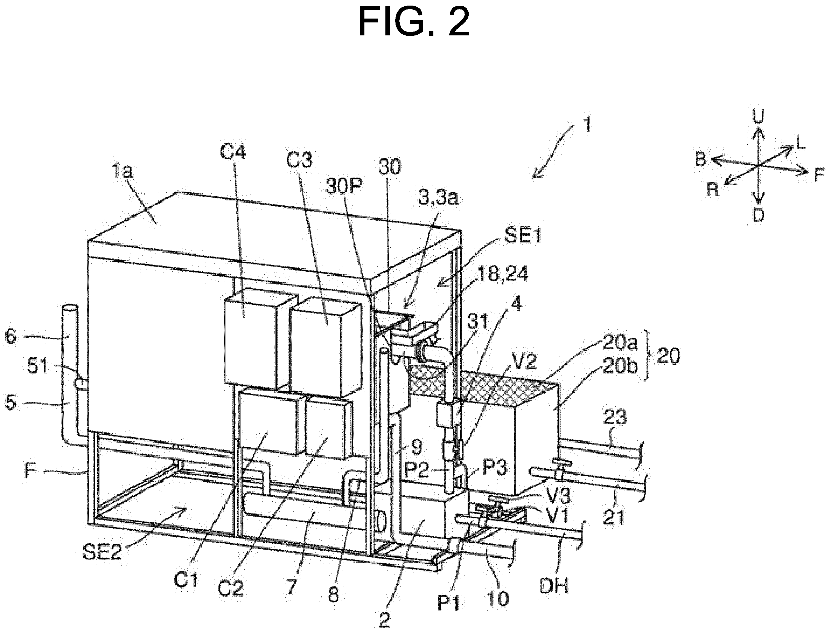

Next, the debris collection device 1 described above will be described in detail. FIGS. 2 to 5 are perspective views illustrating an external appearance of the debris collection device 1. In FIGS. 2 to 5, for convenience, a part of the components of the debris collection device 1 may be omitted. For example, a part of a frame F forming an outer frame and a skeleton of the debris collection device 1 may be omitted in the drawings for convenience.

Here, for convenience of the following description, the directions are defined as follows. First, the gravity direction is defined as an up-down direction. Furthermore, the upstream side in the gravity direction is defined as "up" and the downstream side as "down". Further, in one direction perpendicular to the gravity direction, the connection side of the above-described debris collection hose DH with respect to the debris collection device 1 is defined as "front", and the opposite side as "back". Moreover, in a direction perpendicular to the up-down direction and the front-back direction, one side is defined as "right" and the other side as "left". In the drawings, the front side, the back side, the right side, the left side, the upside, and the downside are denoted by the symbols "F", "B", "R", "L", "U", and "D", respectively, as needed.

The debris collection device 1 includes a collection pump 2 and a filtration device 3. The collection pump 2 is a pump to collect the debris-containing water from the cleaning device CL (see FIG. 1) via the debris collection hose DH. The filtration device 3 is located downstream of the collection pump 2 and filters the debris-containing water supplied by the collection pump 2. The top of the filtration device 3 is covered with a roof 1a of the debris collection device 1. The roof 1a is made of resins such as fiber reinforced plastics (FRP). Details of the filtration device 3 will be described below.

The debris collection device 1 further includes a first pipe P1, a first valve V1, a second pipe P2, and a second valve V2. The first pipe P1 is located upstream of the collection pump 2 and is connected to the collection pump 2. The first valve V1 is a switch valve to manually switch on and off the flow of the debris-containing water and is connected to the first pipe P1.

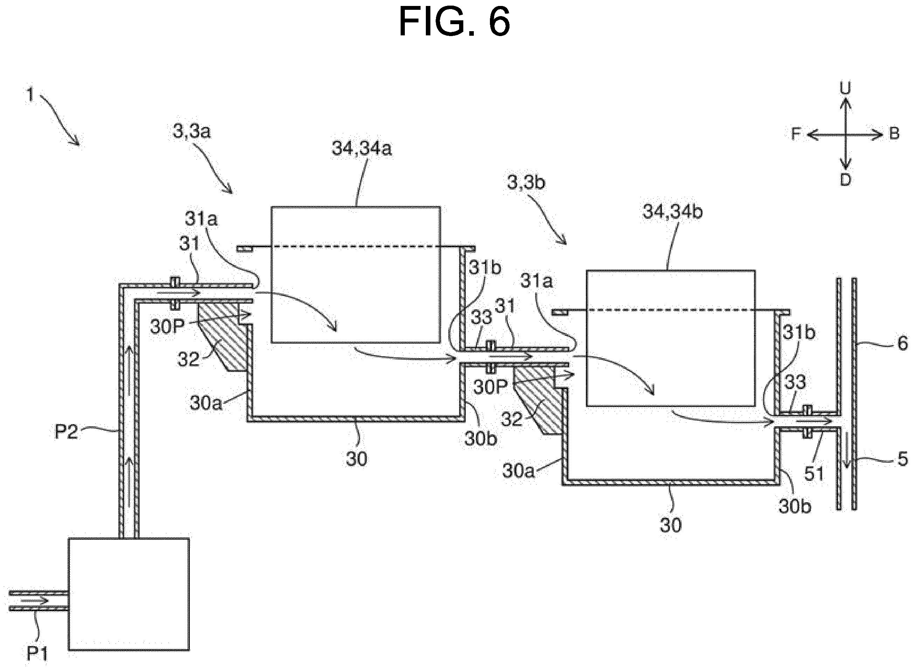

The second pipe P2 is located downstream of the collection pump 2 and communicates with an inflow port 31a (see FIG. 6) of the filtration device 3. The second pipe P2 has a shape that extends upward from the collection pump 2 and has an upper portion bent backward (toward the filtration device 3). Similarly to the first valve V1, the second valve V2 is a switch valve to manually switch on and off the flow of the debris-containing water and is located in the middle of the second pipe P2.

Furthermore, the debris collection device 1 further includes a third pipe P3 and a third valve V3, which will be described below in detail.

When the debris-containing water is purified, the debris collection hose DH is connected to the first pipe P1 via the first valve V1. When the collection pump 2 is driven in a state where the first valve V1 and the second valve V2 are opened and the third valve V3 is closed, the debris-containing water flows from the cleaning device CL toward the debris collection device 1 through the debris collection hose DH. Then, the debris-containing water flows through the first pipe P1, the collection pump 2, and the second pipe P2, is supplied to the filtration device 3, and is filtered by the filtration device 3.

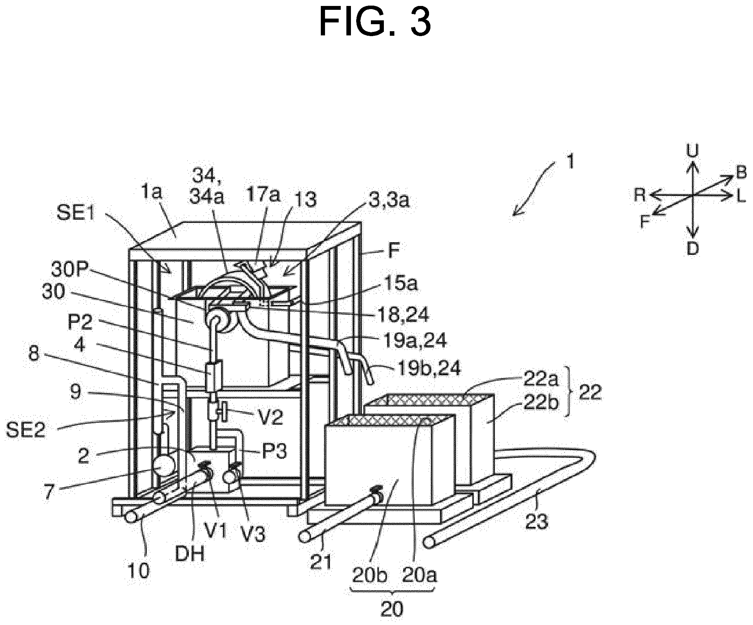

In the second pipe P2, a flowmeter 4 (see FIGS. 2 and 3) is provided between the second valve V2 and the filtration device 3. The flowmeter 4 is provided and, therefore, while monitoring the flow rate of the debris-containing water flowing through the second pipe P2, i.e., the debris-containing water supplied from the cleaning device CL, it is possible to adjust the above-described flow rate by controlling the driving of the collection pump 2. According to the present embodiment, the collection pump 2 is controlled such that the debris-containing water of 100 L flows per minute, for example. Further, the collection pump 2 is controlled by a control unit (e.g., programable logic controller (PLC)) in a first control panel C1 installed on a right surface of the debris collection device 1.

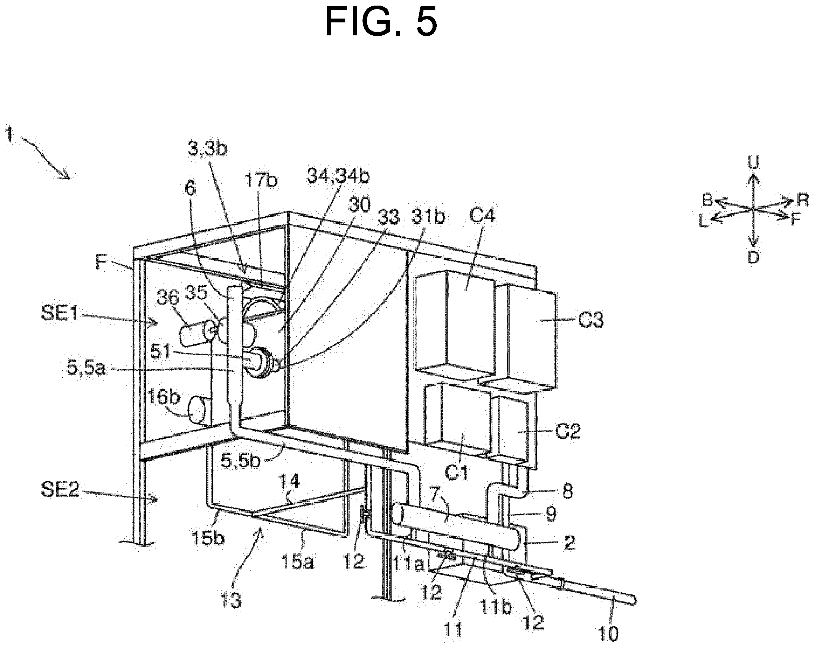

The water (hereinafter also referred to as filtrate water), from which the debris-containing water has been filtered by the filtration device 3, is discharged from a discharge port 31b (see FIG. 5) of the filtration device 3. The discharge port 31b is connected to an outflow pipe 33. The outflow pipe 33 extends backward from the discharge port 31b and is connected to a relay pipe 51 via a flange. The relay pipe 51 extends backward from the flange and is connected to a communication pipe 5. The communication pipe 5 extends in the up-down direction. Therefore, the filtrate water discharged from the outflow pipe 33 flows out to the communication pipe 5 via the relay pipe 51 and then flows downward inside the communication pipe 5.

The above-described communication pipe 5 is also connected to an air release pipe 6 extending in the up-down direction. An upper end of the air release pipe 6 is opened, and a lower end thereof is connected to an upper end of the communication pipe 5. The air release pipe 6 is provided and, therefore, even when the filtrate water discharged from the outflow pipe 33 contains air (for example, bubbles), the above-described air may be released (escaped) into the atmosphere via the air release pipe 6. In this case, there is a lower possibility that the above-described air is guided to an ultraviolet sterilizer 7, described below, through the communication pipe 5 together with the filtrate water and the sterilization capability of the ultraviolet sterilizer 7 for the filtrate water is reduced. From this point of view, it is desirable that the debris collection device 1 include the air release pipe 6 communicating with the communication pipe 5 as in the present embodiment.

As illustrated in FIG. 5, the communication pipe 5 is formed by connecting a large-diameter pipe 5a and a small-diameter pipe 5b. The large-diameter pipe 5a is a pipe that has a larger inner diameter than the small-diameter pipe 5b and extends in the up-down direction. The above-described relay pipe 51 is connected to the large-diameter pipe 5a of the communication pipe 5. The small-diameter pipe 5b is located downstream of the large-diameter pipe 5a. The inner diameter of the small-diameter pipe 5b is set in accordance with the size of a connection port with the small-diameter pipe 5b in the ultraviolet sterilizer 7. The communication pipe 5 includes the large-diameter pipe 5a and, therefore, even in a case where the filtrate water discharged from the outflow pipe 33 contains air, the air is easily released from the filtrate water when the filtrate water flows into the large-diameter pipe 5a.

The lower side (the small-diameter pipe 5b) of the communication pipe 5 extending in the up-down direction is bent forward, further bent downward, and is connected to the ultraviolet sterilizer 7. Therefore, the filtrate water discharged from the discharge port 31b of the filtration device 3 flows downward inside the communication pipe 5, and then flows forward to be supplied to the ultraviolet sterilizer 7. As described above, the debris collection device 1 includes the ultraviolet sterilizer 7 that communicates with the discharge port 31b of the filtration device 3 via the communication pipe 5.

The ultraviolet sterilizer 7 is a device that performs processing to sterilize microorganisms (e.g., bacteria and plankton) contained in filtrate water by ultraviolet irradiation. The ultraviolet sterilizer 7 is located to extend in the front-back direction. The use of the ultraviolet sterilizer 7 as a sterilizer eliminates the need for a disinfectant such as sodium hypochlorite as in a device that performs sterilization processing using the above-described disinfectant. The ultraviolet sterilizer 7 is controlled by a control unit in a second control panel C2 (see FIG. 2) installed on a right surface of the debris collection device 1. Instead of the ultraviolet sterilizer 7, a sterilizer that performs sterilization processing using ultrasonic waves, heat, or the like, may be used.

According to the present embodiment, as illustrated in FIG. 5, the ultraviolet sterilizer 7 is located below the discharge port 31b of the filtration device 3. In this case, the filtrate water discharged from the discharge port 31b of the filtration device 3 may be supplied to the ultraviolet sterilizer 7 through the communication pipe 5 by using only its own weight. Thus, it is not necessary to use a dedicated pump to supply the filtrate water to the ultraviolet sterilizer 7. Therefore, even in a case where the ultraviolet sterilizer 7 is provided, from the viewpoint of achieving a compact configuration, it is desirable that the ultraviolet sterilizer 7 be located below the discharge port 31b as in the present embodiment. Furthermore, the length of the communication pipe 5, the inclination angle with respect to the horizontal direction, and the like, may be arbitrarily set.

Here, when the debris collection device 1 is divided into two sections in the up-down direction, the section located relatively higher is defined as a first section SE1, and the section located relatively lower as a second section SE2. According to the present embodiment, the filtration device 3 is provided in the first section SE1. Meanwhile, the ultraviolet sterilizer 7 is installed in the second section SE2. That is, the ultraviolet sterilizer 7 is located below the installation section (the first section SE1) of the filtration device 3. In this case, a space (the second section SE2) below the first section SE1, in which the filtration device 3 is installed, may be effectively used as a space to provide the ultraviolet sterilizer 7. Therefore, from the viewpoint of realizing the debris collection device 1 that is compact in the up-down direction, it is desirable to define the installation position of the ultraviolet sterilizer 7 as described above.

The filtrate water sterilized by the ultraviolet sterilizer 7 then flows out to a first discharge pipe 8. The first discharge pipe 8 extends upward from a front upper portion of the ultraviolet sterilizer 7, is bent forward, and further extends upward (see FIGS. 2 and 5). An upper end of the first discharge pipe 8 is opened.

A second discharge pipe 9 is connected to the first discharge pipe 8. The second discharge pipe 9 is connected between the upper end (open end) and the lower end (a connection-side end portion with the ultraviolet sterilizer 7) of the first discharge pipe 8. The second discharge pipe 9 extends leftward from a portion connecting with the first discharge pipe 8, is bent downward, and is then bent forward (see FIG. 2). A discharge hose 10 is connected to the second discharge pipe 9.

According to the present embodiment, the height of a connection portion between the first discharge pipe 8 and the second discharge pipe 9 is lower than a connection portion between the above-described communication pipe 5 and the relay pipe 51. With this positional relationship, the filtrate water flowing from the outflow pipe 33 to the communication pipe 5 via the relay pipe 51 is guided to the first discharge pipe 8 via the ultraviolet sterilizer 7. Then, the above-described filtrate water flows upward inside the first discharge pipe 8 toward the connection portion between the first discharge pipe 8 and the second discharge pipe 9. Then, the above-described filtrate water flows out downward from the above-described connection portion through the second discharge pipe 9 and then is discharged from the discharge hose 10 to, for example, the ocean.

Further, a drain pipe 11 (see FIG. 5) is connected to the above-described communication pipe 5. An end portion of the drain pipe 11 on the side opposite to the connection side with the communication pipe 5 is connected to the second discharge pipe 9. Further, two branched drain pipes 11a and 11b branched from the drain pipe 11 are connected to a bottom portion of the ultraviolet sterilizer 7. A switch valve 12 to switch on and off the flow of the fluid is provided at a predetermined position of the drain pipe 11.

When the debris collection device 1 is in operation, the switch valve 12 is closed so that the fluid does not flow inside the drain pipe 11. On the other hand, when the debris collection device 1 is not in operation (stopped), each of the switch valves 12 is opened so that the filtrate water in the communication pipe 5 and the filtrate water inside the ultraviolet sterilizer 7 may be guided to the second discharge pipe 9 via the drain pipe 11 and may be discharged from the second discharge pipe 9 to the outside via the discharge hose 10. Thus, when the debris collection device 1 is not in operation, the inside of the communication pipe 5 and the inside of the ultraviolet sterilizer 7 may be kept clean.

### <3. Details of Filtration Device>

Next, the filtration device 3 will be described in detail. FIG. 6 is a cross-sectional view of the filtration device 3. According to the present embodiment, the debris collection device 1 includes a plurality of the filtration devices 3. Specifically, the number of the filtration devices 3 is two. Each of the filtration devices 3 has the same configuration except that a filter 34, described below, has a different mesh size, that is, a different size (open area) of a passage hole of the filter 34, through which the debris-containing water passes. The number of the filtration devices 3 may be one or three or more.

According to the present embodiment, the two filtration devices 3 are connected in series. Specifically, in this configuration, the filtrate water, which has passed through the first filtration device 3 via the first pipe P1 and the second pipe P2 illustrated in FIG. 2 and the like, passes through the second filtration device 3 and is guided to the communication pipe 5. In the following description, when the two filtration devices 3 needs to be particularly distinguished from each other, the filtration device 3 located on the upstream side is referred to as a first filtration device 3a, and the filtration device 3 provided on the downstream side is referred to as a second filtration device 3b. Further, the filter 34 of the first filtration device 3a is also referred to as a first filter 34a, and the filter 34 of the second filtration device 3b is also referred to as a second filter 34b.

Furthermore, in FIG. 6, the flows of the debris-containing water and the filtrate water are indicated by solid arrows. Further, the second valve V2 and the flowmeter 4, which are illustrated in FIG. 2 and the like, are not illustrated in FIG. 6 for convenience.

The second pipe P2 is connected to an inflow pipe 31 of the first filtration device 3a via a flange. A downstream end portion of the inflow pipe 31 forms the inflow port 31a of the filtration device 3. The inflow port 31a of the first filtration device 3a is located above the collection pump 2. Therefore, the debris-containing water having passed through the collection pump 2 moves upward inside the second pipe P2, is then guided backward by the inflow pipe 31, and flows into a housing 30 via the inflow port 31a as the water to be processed.

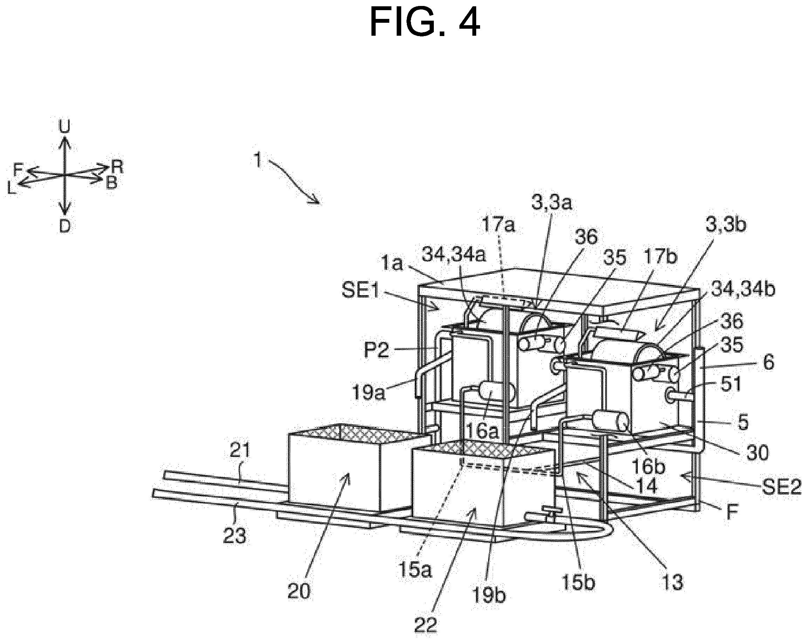

The inflow pipe 31 is supported by a rib 32 provided on a front wall 30a of the housing 30 of the first filtration device 3a. The housing 30 has a box shape having a bottom surface portion and a side surface portion, and the top of the housing 30 is opened (see FIGS. 3, 4, and the like). That is, the filtration device 3 is an open type. The side surface portion of the housing 30 includes the above-described front wall 30a and further includes a rear wall 30b. The rear wall 30b includes the discharge port 31b for filtrate water. Therefore, it may be said that the housing 30 includes the inflow port 31a provided on the front wall 30a and the discharge port 31b provided on the rear wall 30b.

On an upper portion of the front wall 30a of the housing 30, an opening portion 30P is formed, through which a receiving tray portion 18 (see FIGS. 2 and 3) described below is extracted to the outside of the housing 30. The inflow pipe 31 extends from the connection side with the second pipe P2 toward the inside of the opening portion 30P. As a result, the inflow port 31a is located inside the opening portion 30P.

The filter 34 is provided in the housing 30. The filter 34 is formed of, for example, a cylindrical drum filter. The filter 34 is driven by a drive mechanism 35 (see FIG. 4) including a gear and the like to rotate about an axis extending in the front-back direction. The drive mechanism 35 is driven by a motor 36 (see FIG. 4). The motor 36 in the first filtration device 3a is driven by a control unit in a third control panel C3 (see FIG. 2) installed on the right surface of the debris collection device 1.

The filter 34 is provided to protrude upward from the inside of the housing 30. Therefore, a part of the filter 34 is located inside the housing 30, and the rest is located outside the housing 30, that is, in an open space on top of the housing 30.

The debris-containing water flowing into the housing 30 through the inflow port 31a flows into the filter 34 from one side (here, the front side) in the rotation axis direction of the filter 34 (the first filter 34a) and falls due to its own weight. Here, in the first filtration device 3a, the first filter 34a has, for example, a plurality of passage holes that captures particles having a particle diameter of 300 µm or more and allows passage of components having a particle diameter of less than 300 µm. Therefore, only the components having a particle diameter of less than 300 µm, which is included in the debris-containing water, pass downward through the filter 34 (the first filter 34a) and are then discharged as filtrate water from the discharge port 31b provided in the rear wall 30b of the housing 30. Furthermore, the size of the above-described passage hole of the first filter 34a may be arbitrarily set.

The above-described discharge port 31b is located below the above-described inflow port 31a and above the collection pump 2. The discharge port 31b is connected to the outflow pipe 33 extending backward as described above. The outflow pipe 33 of the first filtration device 3a is connected to the inflow pipe 31 of the second filtration device 3b via a flange. Therefore, the filtrate water discharged from the discharge port 31b of the first filtration device 3a via the outflow pipe 33 passes through the inflow pipe 31 of the second filtration device 3b and flows into the housing 30 of the second filtration device 3b from the inflow port 31a as the water to be processed. According to the present embodiment, the first filtration device 3a and the second filtration device 3b are supported in the first section SE1 (see FIGS. 2 and 3) such that the discharge port 31b of the first filtration device 3a and the inflow port 31a of the second filtration device 3b are at the same height position.

In the second filtration device 3b, similarly to the first filtration device 3a, the filtrate water flows into the filter 34 via the inflow port 31a from one side (here, the front side) of the filter 34 (the second filter 34b) in the rotation axis direction. The second filter 34b is driven by the drive mechanism 35 including a gear and the like to rotate about an axis extending in the front-back direction. The drive mechanism 35 is driven by the motor 36. The motor 36 in the second filtration device 3b is driven by a control unit in a fourth control panel C4 (see FIG. 2) installed on the right surface of the debris collection device 1.

The filtrate water having flowed into the second filter 34b falls due to its own weight. Here, in the second filtration device 3b, the second filter 34b has, for example, a plurality of passage holes that captures particles having a particle diameter of 50 µm or more and allows passage of components having a particle diameter of less than 50 µm. Therefore, only the components having a particle diameter of less than 50 µm, which is included in the above-described filtrate water, pass downward through the second filter 34b and are then discharged from the discharge port 31b provided in the rear wall 30b of the housing 30. Further, the size of the above-described passage holes of the second filter 34b may be arbitrarily set.

The filtrate water discharged from the discharge port 31b of the second filtration device 3b passes through the outflow pipe 33, flows out to the communication pipe 5 via the relay pipe 51, and then flows downward inside the communication pipe 5. Then, the above-described filtrate water passes through the communication pipe 5 and flows toward the ultraviolet sterilizer 7 as described above.

As described above, the filtration device 3 (for example, the first filtration device 3a) includes the inflow port 31a into which the water to be processed having passed through the collection pump 2 flows, the filter 34 that filters the water to be processed, and the discharge port 31b from which the filtrate water having passed through the filter 34 is discharged. The inflow port 31a is located above the collection pump 2, and the discharge port 31b is located below the inflow port 31a.

In the above-described positional relationship, when the water to be processed (debris-containing water) is pumped up to the position of the inflow port 31a by the collection pump 2, the water to be processed may be then filtered by the filter 34 (the first filter 34a) using only the self-weight of the water to be processed, and the filtrate water may be discharged from the discharge port 31b. Therefore, it is not necessary to use a pump dedicated to discharge the filtrate water separately from the collection pump 2 that supplies the water to be processed to the first filtration device 3a. As a result, the water to be processed may be purified with the simple and compact configuration of the debris collection device 1.

In particular, the above-described water to be processed is debris-containing water that contains the debris separated from the bottom of the ship SH (see FIG. 1). In this case, the debris contained in the debris-containing water may be removed by the filtration device 3, and therefore, even when the filtrate water is discharged to the ocean, there is almost no concern that ocean pollution occurs, and the filtrate water may be discharged to the ocean. That is, from the viewpoint of enabling discharge to the ocean, the water to be processed, which is a target to be filtered by the filtration device 3, may be the debris-containing water.

Furthermore, the discharge port 31b of the first filtration device 3a is located between the collection pump 2 and the inflow port 31a in the up-down direction. With this configuration, additional processing may be performed on the downstream side of the first filtration device 3a by using the self-weight of the filtrate water. For example, as in the present embodiment, when the second filtration device 3b is located downstream of the first filtration device 3a, the filtrate water discharged from the first filtration device 3a at the beginning may be used as the water to be processed, and the water to be processed may be filtered again by the second filtration device 3b by using only the self-weight of the water to be processed and discharged as filtrate water. Further, for example, the ultraviolet sterilizer 7 (see FIG. 2) may be provided below the first filtration device 3a, and the filtrate water discharged from the first filtration device 3a may be supplied to the ultraviolet sterilizer 7 by using only its own weight and may be subjected to sterilization processing.

Therefore, from the viewpoint of enabling additional processing using the self-weight of the filtrate water, it is desirable that the discharge port 31b be located between the collection pump 2 and the inflow port 31a, that is, located above the collection pump 2, as in the present embodiment.

Furthermore, the open-type filtration device 3 does not need to generate the pressure (for example, high pressure) necessary for filtration, as compared to for example a closed-type filtration device, and the internal configuration of the filtration device 3 is simple. Further, since the inside of the filtration device 3 may be accessed from the open space, maintenance such as inspection and replacement of internal components (e.g., the filter 34) is also facilitated. In these respects, it is very effective to form the filtration device 3 as an open type.

Further, according to the present embodiment, as illustrated in FIG. 6, the discharge port 31b of the one filtration device 3 (e.g., the first filtration device 3a) among the plurality of filtration devices 3 is located at the same height as the inflow port 31a of the other filtration device 3 (e.g., the second filtration device 3b) and communicates with the inflow port 31a of the second filtration device 3b via the outflow pipe 33. Moreover, the discharge port 31b of the first filtration device 3a may be located at a position higher than the inflow port 31a of the second filtration device 3b.

In this configuration, the filtrate water discharged from the discharge port 31b of the first filtration device 3a flows into the inflow port 31a of the second filtration device 3b via the outflow pipe 33 due to its own weight, is filtered again by the second filtration device 3b, and is discharged. Therefore, from the viewpoint of realizing multi-stage filtration by the plurality of filtration devices 3 using only the self-weight of the water to be processed or the filtrate water, it is desirable to define the positional relationship in the height direction and the connection relationship between the discharge port 31b of the first filtration device 3a and the inflow port 31a of the second filtration device 3b as described above.

Further, according to the present embodiment, the passage hole of the first filter 34a of the first filtration device 3a allows passage of components having a particle diameter of less than 300 µm. On the other hand, the passage hole of the second filter 34b of the second filtration device 3b allows passage of components having a particle diameter of less than 50 µm. That is, among the plurality of filtration devices 3, the filtration device 3 located further downstream in the flow direction of the water to be processed has a smaller passage hole of the filter 34 for the water to be processed.

As described above, the plurality of filtration devices 3 each including the filter 34 having a different size of the passage hole is arranged in the flow direction of the water to be processed in order from the filtration device 3 having a larger passage hole of the filter 34, and thus it is possible to remove and filter suspended matter contained in the water to be processed in order from the larger particle diameter. Therefore, from the viewpoint of efficiently reducing the occurrence of clogging of the filter 34 in each of the filtration devices 3, it is desirable to arrange the plurality of filtration devices 3 in order from the filtration device 3 including the filter 34 having a larger passage hole as described above.

### <4. Backwashing of Filter and Collection of Debris>

The debris collection device 1 according to the present embodiment includes a configuration for backwashing the filter 34. Backwashing the filter 34 refers to the process to apply a fluid to the filter 34 from the outside of the filter 34, that is, from the direction opposite to the direction in which filtration is performed by the filter 34 (the direction from the inside to the outside of the filter 34). According to the present embodiment, the filtrate water filtered by the filtration device 3 is used as the above-described fluid. Hereinafter, the configuration for backwashing the filter 34 will be described in detail.

As illustrated in FIGS. 3 to 5, the debris collection device 1 includes a backwash water supply portion 13. The backwash water supply portion 13 supplies a part of the filtrate water flowing through the communication pipe 5 to the filtration device 3 as backwash water for the filter 34. According to the present embodiment, the backwash water supply portion 13 includes a backwash water extraction pipe 14, a first branch pipe 15a, a second branch pipe 15b, a first backwash pump 16a, a second backwash pump 16b, a first spray portion 17a, and a second spray portion 17b.

The backwash water extraction pipe 14 is connected to the drain pipe 11 described above. A connection portion between the backwash water extraction pipe 14 and the drain pipe 11 is located further upstream of the switch valve 12 located on the most upstream side in the drain pipe 11.

Most of the filtrate water flowing through the communication pipe 5 is supplied to the above-described ultraviolet sterilizer 7, but the rest enters the drain pipe 11 and flows to the backwash water extraction pipe 14 on the upstream side of the switch valve 12. The filtrate water flowing into the backwash water extraction pipe 14 is branched into the first branch pipe 15a and the second branch pipe 15b. As illustrated in FIG. 4, a first backwash pump 16a is located in the middle of the first branch pipe 15a. Further, as illustrated in FIG. 4, a second backwash pump 16b is located in the middle of the second branch pipe 15b.

By driving the first backwash pump 16a, the filtrate water flowing through the first branch pipe 15a is delivered to the first spray portion 17a. The first spray portion 17a is located above the first filter 34a and extends in the front-back direction. The first spray portion 17a sprays the filtrate water to the outer side (outer circumferential surface) of the first filter 34a. Thus, the first filter 34a is backwashed. Further, the first branch pipe 15a is located between the first backwash pump 16a and the first spray portion 17a and penetrates through a sidewall of the housing 30 of the first filtration device 3a.

Similarly, by driving the second backwash pump 16b, the filtrate water flowing through the second branch pipe 15b is delivered to the second spray portion 17b. The second spray portion 17b is located above the second filter 34b and extends in the front-back direction. The filtrate water is also sprayed to the outer side (outer circumferential surface) of the second filter 34b by the second spray portion 17b. Thus, the second filter 34b is backwashed. Further, the second branch pipe 15b is located between the second backwash pump 16b and the second spray portion 17b and penetrates a sidewall of the housing 30 of the second filtration device 3b.

As a result of backwashing the first filter 34a, adhering substance (including debris) separated from the first filter 34a is received by the receiving tray portion 18 (see FIGS. 2 and 3) as backwashing waste water together with the filtrate water having passed through the first filter 34a from the outside to the inside. Furthermore, the debris that remains inside the first filter 34a without being filtered by the first filter 34a and is lifted upward by the rotation of the first filter 34a is also received by the receiving tray portion 18 due to backwashing of the first filter 34a.

The receiving tray portion 18 extends in the front-back direction inside the filter 34 (the first filter 34a) and is extracted to the front of the housing 30 via the opening portion 30P of the housing 30. The debris-containing backwash waste water is delivered from the receiving tray portion 18 to a first collection box 20 via a first backwash waste water hose 19a. The first collection box 20 has a box shape whose upper side is opened and has a double structure of a net-like first basket 20a and a first outer box 20b that accommodates the first basket 20a. Therefore, the debris (a particle diameter of 300 µm or more) contained in the backwash waste water delivered to the first collection box 20 is captured and collected by the first basket 20a. On the other hand, the water (filtrate water, seawater) contained in the backwash waste water passes through a mesh portion of the first basket 20a and is discharged to the outside (for example, the ocean) via a first waste water hose 21 connected to a front wall of the first outer box 20b. Furthermore, the first basket 20a may be omitted.

The adhering substance separated from the second filter 34b by backwashing the second filter 34b is received by a receiving tray portion (not illustrated) as backwash waste water together with the filtrate water passing through the second filter 34b from the outside to the inside. Furthermore, the debris that remains inside the second filter 34b without being filtered by the second filter 34b and is lifted upward by the rotation of the second filter 34b is also received by the above-described receiving tray portion due to backwashing of the second filter 34b.

The above-described debris-containing backwash waste water is delivered from the above-described receiving tray portion to a second collection box 22 via a second backwash waste water hose 19b (see FIGS. 3 and 4). The second collection box 22 has a box shape whose upper side is opened and has a double structure of a net-like second basket 22a and a second outer box 22b that accommodates the second basket 22a. Therefore, the debris (a particle diameter of 50 µm or more and less than 300 µm) contained in the backwash waste water delivered to the second collection box 22 is captured and collected by the second basket 22a. On the other hand, water (filtrate water, seawater) contained in the backwash waste water passes through a mesh portion of the second basket 22a and is discharged to the outside (for example, the ocean) via a second waste water hose 23 connected to a rear wall of the second outer box 22b. Furthermore, the second basket 22a may be omitted.

From the viewpoint of reducing clogging of the filter 34 and enabling the debris captured without passing through the filter 34 to be collected in the first collection box 20 or the second collection box 22, it is desirable that the debris collection device 1 include the above-described backwash water supply portion 13. Furthermore, since a part of the filtrate water is used as backwash water by the backwash water supply portion 13, it is not necessary to separately prepare the water dedicated for backwashing.

From the viewpoint of making it possible to collect the debris captured by backwashing the filter 34 as a captured matter and dispose the captured matter collectively and efficiently, it is desirable that the debris collection device 1 include the collection box. Furthermore, the above-described collection box may be formed by at least one of the first collection box 20 and the second collection box 22 described above.

According to the present embodiment, as illustrated in FIG. 3, the above-described collection box is provided below the first section SE1, which is an installation section of the filtration device 3. From the viewpoint of making it possible to collect the debris (captured matter) in the above-described collection box by using the flow of the backwash waste water due to its own weight, it is desirable that the above-described collection box be provided below the first section SE1.

Furthermore, from the viewpoint of ensuring that the backwash waste water is guided to the above-described collection box and the debris (captured matter) is collected in the above-described collection box, it is desirable that the debris collection device 1 include a backwash waste water guide portion 24 that guides the backwash waste water after backwashing the filter 34 to the above-described collection box. According to the present embodiment, the backwash waste water guide portion 24 includes the above-described receiving tray portion 18 and the backwash waste water hose (the first backwash waste water hose 19a or the second backwash waste water hose 19b).

### <5. Solution to Clogging of Debris Collection Hose>

The debris collection device 1 according to the present embodiment has a configuration to be able to eliminate clogging even when the inside of the debris collection hose DH is clogged by foreign matter. This configuration will be described below. The above-described foreign matter includes debris separated from the ship bottom by ship bottom cleaning and also objects (for example, waste, metal pieces, stones in the ocean) other than the debris.

As illustrated in FIGS. 2 and 3, the debris collection device 1 further includes the third pipe P3 and the third valve V3 in addition to the first pipe P1, the second pipe P2, the first valve V1, and the second valve V2 described above.

The third pipe P3 is branched from the second pipe P2 between the collection pump 2 and the second valve V2. The third pipe P3 extends leftward from a portion connecting with the second pipe P2, bends downward, and then extends forward. The third valve V3 is connected to the third pipe P3. The third valve V3 is a switch valve to manually switch on and off the flow.

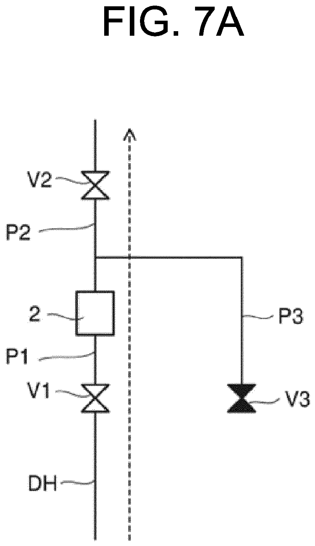

When the debris-containing water is delivered from the cleaning device CL (see FIG. 1) to the debris collection device 1, the debris collection hose DH is connected to the first valve V1, as illustrated in FIG. 2 and the like. In this state, the first valve V1 and the second valve V2 are opened, the third valve V3 is closed, and the collection pump 2 is driven. In this case, the debris-containing water passing through the debris collection hose DH may be delivered to the filtration device 3 (the first filtration device 3a) via the first pipe P1 and the second pipe P2. FIG. 7A illustrates the flow of the above-described debris-containing water at this time (see the dashed arrow).

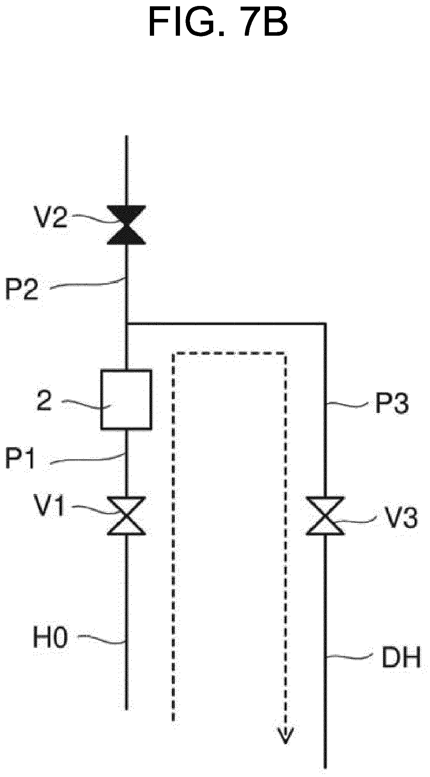

On the other hand, when clogging occurs in the debris collection hose DH, the debris collection hose DH is connected to the third valve V3, as illustrated in FIG. 7B. Then, a supply hose H0 for supplying seawater is connected to the first valve V1. In this state, the first valve V1 and the third valve V3 are opened, the second valve V2 is closed, and the collection pump 2 is driven. In this case, as illustrated in FIG. 7B, the seawater passing through the supply hose H0 flows through the first pipe P1 via the first valve V1, flows into the third pipe P3 from the middle of the second pipe P2, and flows into the debris collection hose DH via the third valve V3 (see the dashed arrow). That is, in the debris collection hose DH, the seawater flows in a direction opposite to the normal direction in which the debris-containing water flows from the cleaning device CL toward the debris collection device 1. With the flow of the seawater, even when clogging occurs inside the debris collection hose DH due to foreign matter, the foreign matter is pushed out toward the cleaning device CL by the above-described seawater so that the clogging may be eliminated.

As described above, in order to cope with clogging of the debris collection hose DH, it is desirable that the debris collection device 1 further include the third pipe P3 and the third valve V3 and switches on and off each valve in accordance with the use state of the debris collection hose DH.

### <6. Others>

The water to be processed as a target to be purified by the purification device is not limited to the debris-containing water and may be ballast water. The ballast water is seawater loaded on a ship (for example, a cargo ship) for safe navigation even when the ship is in an empty state. When a ship departs from a harbor without cargo, the seawater at the departure point is loaded as ballast water and is discharged to the outside of the ship at the arrival point where cargo is loaded. When aquatic organisms contained in the ballast water are discharged at the arrival point different from the departure point, the aquatic organisms may affect the ecosystem as foreign species. In order to reduce such an effect, it is necessary to purify the ballast water, and such ballast water may also be a target to be purified by the purification device according to the present embodiment. Further, the water to be processed may be a fluid (for example, contaminated water or sewage) other than seawater.

### <7. Appendix>

The purification device and the purification system for the water to be processed described in the present embodiment may also be expressed as follows.

A purification device for water to be processed according to Appendix (1), the purification device comprising:
a collection pump; and
a filtration device located downstream of the collection pump,
wherein the filtration device includes:
   an inflow port into which the water to be processed having passed through the collection pump flows;
   a filter that filters the water to be processed; and
   a discharge port through which filtrate water having passed through the filter is discharged,
the inflow port is located above the collection pump, and
the discharge port is located below the inflow port.

A purification device according to Appendix (2) is the purification device according to Appendix (1),
wherein the discharge port is located above the collection pump.

A purification device according to Appendix (3) is the purification device according to Appendix (1) or (2),
wherein the filtration device further includes a housing in which the filter is provided and which has the inflow port and the discharge port, and
a top of the housing is opened.

A purification device according to Appendix (4) is the purification device according to any one of Appendixes (1) to (3),
wherein the filtration device includes a plurality of filtration devices, and
the discharge port of one filtration device out of the plurality of filtration devices is located at a position equal to or higher than a height of the inflow port of the other filtration device and communicates with the inflow port of the other filtration device via an outflow pipe.

A purification device according to Appendix (5) is the purification device according to Appendix (4),
wherein among the plurality of filtration devices, a filtration device located further downstream in a flow direction of the water to be processed has a smaller passage hole of the filter for the water to be processed.

A purification device according to Appendix (6) is the purification device according to any one of Appendixes (1) to (5),
the purification device further comprising a sterilizer that communicates with the discharge port of the filtration device via a communication pipe and is located below the discharge port of the filtration device.

A purification device according to Appendix (7) is the purification device according to Appendix (6),
wherein the sterilizer is located below an installation section of the filtration device.

A purification device according to Appendix (8) is the purification device according to Appendix (6) or (7),
the purification device further comprising an air release pipe that communicates with the communication pipe.

A purification device according to Appendix (9) is the purification device according to any one of Appendixes (6) to (8),
the purification device further comprising a backwash water supply portion that supplies a part of the filtrate water flowing through the communication pipe to the filtration device as backwash water for the filter.

A purification device according to Appendix (10) is the purification device according to Appendix (9),
the purification device further comprising a collection box that collects a captured matter that is captured by backwashing the filter.

A purification device according to Appendix (11) is the purification device according to Appendix (10),
wherein the collection box is provided below the installation section.

A purification device according to Appendix (12) is the purification device according to Appendix (10) or (11),
the purification device further comprising a backwash waste water guide portion that guides backwash waste water after backwashing the filter to the collection box.

A purification device according to Appendix (13) is the purification device according to any one of Appendixes (1) to (12),
the purification device further comprising:
a first pipe that is located upstream of the collection pump and is connected to the collection pump;
a first valve connected to the first pipe;
a second pipe that is located downstream of the collection pump and communicates with the inflow port of the filtration device;
a second valve located in the middle of the second pipe;
a third pipe that is branched from the second pipe between the collection pump and the second valve; and
a third valve connected to the third pipe.

A purification device according to Appendix (14) is the purification device according to any one of Appendixes (1) to (13),
wherein the water to be processed is debris-containing water that contains debris separated from a bottom of a ship.

A purification device according to Appendix (15) is the purification device according to Appendix (14),
wherein the purification device is installed in a work ship different from the ship that is a target for bottom cleaning.

A purification system according to Appendix (16) comprising:
the purification device according to Appendix (14) or (15);
a cleaning device that cleans the bottom of the ship; and
a collection hose that delivers the debris-containing water from the cleaning device to the purification device.

Although the embodiment of the present invention has been described above, the scope of the present invention is not limited thereto, and the present invention may be implemented by being expanded or changed without departing from the gist of the invention.

### INDUSTRIAL APPLICABILITY

The present invention is applicable to, for example, a system that cleans the bottom of a ship.

### REFERENCE SIGNS LIST

1 Debris collection device (purification device)
2 Collection pump
3 Filtration device
3a First filtration device
3b Second filtration device
5 Communication pipe
6 Air release pipe
7 Ultraviolet sterilizer
13 Backwash water supply portion
20 First collection box (collection box)
22 Second collection box (collection box)
24 Backwash waste water guide portion
30 Housing
31a Inflow port
31b Discharge port
33 Outflow pipe
34 Filter
34a First filter
34b Second filter
300 Work ship
500 Purification system
CL Cleaning device
DH Debris collection hose
P1 First pipe
P2 Second pipe
P3 Third pipe
SE1 First section (installation section)
SH Ship
V1 First valve
V2 Second valve
V3 Third valve

## Claims

1. A purification device for water to be processed, the purification device comprising:
a collection pump; and
a filtration device located downstream of the collection pump,
wherein the filtration device includes:
an inflow port into which the water to be processed having passed through the collection pump flows;
a filter that filters the water to be processed; and
a discharge port through which filtrate water having passed through the filter is discharged,
the inflow port is located above the collection pump, and
the discharge port is located below the inflow port.

2. The purification device according to claim 1, wherein the discharge port is located above the collection pump.

3. The purification device according to claim 1,
wherein the filtration device further includes a housing in which the filter is provided and which has the inflow port and the discharge port, and
a top of the housing is opened.

4. The purification device according to claim 1,
wherein the filtration device includes a plurality of filtration devices, and
the discharge port of one filtration device out of the plurality of filtration devices is located at a position equal to or higher than a height of the inflow port of an other filtration device and communicates with the inflow port of the other filtration device via an outflow pipe.

5. The purification device according to claim 4, wherein among the plurality of filtration devices, a filtration device located further downstream in a flow direction of the water to be processed has a smaller passage hole of the filter for the water to be processed.

6. The purification device according to claim 1, further comprising a sterilizer that communicates with the discharge port of the filtration device via a communication pipe and is located below the discharge port of the filtration device.

7. The purification device according to claim 6, wherein the sterilizer is located below an installation section of the filtration device.

8. The purification device according to claim 6, further comprising an air release pipe that communicates with the communication pipe.

9. The purification device according to claim 6, further comprising a backwash water supply portion that supplies a part of the filtrate water flowing through the communication pipe to the filtration device as backwash water for the filter.

10. The purification device according to claim 9, further comprising a collection box that collects a captured matter that is captured by backwashing the filter.

11. The purification device according to claim 10, wherein the collection box is provided below the installation section.

12. The purification device according to claim 10, further comprising a backwash waste water guide portion that guides backwash waste water after backwashing the filter to the collection box.

13. The purification device according to claim 1, further comprising:
a first pipe that is located upstream of the collection pump and is connected to the collection pump;
a first valve connected to the first pipe;
a second pipe that is located downstream of the collection pump and communicates with the inflow port of the filtration device;
a second valve located in the middle of the second pipe;
a third pipe that is branched from the second pipe between the collection pump and the second valve; and
a third valve connected to the third pipe.

14. The purification device according to claim 1, wherein the water to be processed is debris-containing water that contains debris separated from a bottom of a ship.

15. The purification device according to claim 14, installed in a work ship different from the ship that is a target for bottom cleaning.

16. A purification system comprising:
the purification device according to claim 14 or 15;
a cleaning device that cleans the bottom of the ship; and
a collection hose that delivers the debris-containing water from the cleaning device to the purification device.
